Europäisches Patentamt

European Patent Office

Office européen des brevets

(11) Publication number: **0 197 606**
**B1**

## (12) EUROPEAN PATENT SPECIFICATION

(45) Date of publication of patent specification: **18.07.90**

(21) Application number: **86200557.6**

(22) Date of filing: **02.04.86**

(51) Int. Cl.⁵: **H 02 G 15/013,**
**H 02 G 15/113**

(54) Method for watertight coupling of electric cables to one another by means of a socket coupling.

(30) Priority: **04.04.85 NL 8501016**

(43) Date of publication of application:
**15.10.86 Bulletin 86/42**

(45) Publication of the grant of the patent:
**18.07.90 Bulletin 90/29**

(84) Designated Contracting States:
**BE DE FR GB NL**

(56) References cited:
**DE-A-1 465 562**
**DE-A-1 924 181**
**DE-A-2 020 637**
**FR-A-2 388 430**

(73) Proprietor: **Lovink Terborg B.V.**
**Lovinkweg 3 P.O. Box 2**
**NL-7060 AA Terborg (NL)**

(72) Inventor: **van den Hout, Jan Simon**
**No. 3 Eksterhof**
**NL-7051 WP Varsseveld (NL)**
Inventor: **Kaptein, Bartholomeus Johannes**
**No. 21 Tamboerpad**
**NL-7071 XB Ulft (NL)**

(74) Representative: **Schumann, Bernard Herman**
**Johan et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a method for watertight coupling by means of a socket coupling of two cables with one another, each cable comprising at least one conducting core having a covering layer arranged around it, according to which method the ends of the or each pair of cores to be coupled are connected to one another, the first part of a longitudinally divisible socket coupling is placed in the area of the coupled core ends, one or more spacers and/or insulation material is arranged if required in the area of the coupled ends, and the second part of the socket coupling is placed and connected with the first part, whereby the surfaces of both socket coupling parts facing one another have a complementary form such that they butt entirely against one another, and whereby the assembled socket coupling displays at both ends an opening serving to accommodate a cable.

Such a method is known from FR-A-2 388 430. Up to the present use has mostly been made of an insulating covering layer and casing consisting of paper in combination with insulating oil, while a lead casing served for protection and water sealing. Such a cable is expensive and heavy. It is therefore proposed to make use of a covering layer of linked polythene. This material is defined as XLPE (cross-linked polythene, in the German literature called VPE: vernetzt Polyethylän). This material is a thermic and electrical high grade insulating material. It is however sensitive to socalled partial discharging in enclosed cavities or impurities which through carbonization lose their insulating properties to an increasing extent whereby break-through can occur and even short-circuiting can be caused. The linked polythene can acquire semi-conducting properties through the addition of determined materials. In this context a core can be enclosed by a covering layer which takes the form of semi-conducting linked polythene or insulating linked polythene, if required followed by another layer of semi-conducting polythene, particularly between the cores inside one cable. In this way a virtually radial electrical field is obtained in the or each cable core. In order to attain a fluent transition at the ends of the semi-conducting covering layer field guidance must be applied, for example field guidance with a form element, such as an electrically conducting funnel connected for conduction with the covering layer.

The problem that arises here is that the linked polythene does not generally lend itself to adhering with other materials, whereby the desired liquid sealing results.

The invention has for its object to make use of the existing art in so far as this is reliable and to offer a method which can be performed quickly and easily without special skills, as a result of which it is inexpensive. To this end the method according to the invention displays the feature that the covering layer of the core(s) is heated and that a plastic is subsequently injected into the end zones of the assembled socket coupling, which plastic forms after curing a liquid tight sealing with the covering layer of the core(s).

The injected plastic can after curing serve in addition to fix the or each form element.

From the prior art reference mentioned above FR-A-2 388 430 the use of poly-urethane is known per se. It is should be noted that in this prior art specification this material is only used as a sealing material in the recess 20. This prior art specification does not relate to a water-tight connection between the socket and the outer surface of the cable.

DE-A-1 465 562 refers to a flame-treatment. In this connection it should be noted that this is not a heating operation of the type to which the invention pertains, but rather a surface-treatment to roughen the surfaces.

DE-A-1 924 181 describes the use of a polythene mass that can be injected to serve as a sealing. According to the invention, on the contrary, the covering layer of the or each core is heated before or after the synthetic resin is injected, so that the at least local temperature increase causes the synthetic resin to cure and form the desired water tight seal.

DE-A-2 020 637 describes the injection of a sealing mass between two socket halves. Thereto use is made of co-operating elongate recesses together bounding an injection channel. Contrary to this prior art technique the essence of the present invention is the sealing between the cable and the socket and specifically at the end zones of this socket. Therefore, the channel between the two socket halves according to this prior art specification serves a basically different purpose from the invention.

Very good results are achieved with the method which has the special feature that the plastic in cured state is polyurethane.

In a practical embodiment a method is recommended whereby the covering layer contains a plastic from the group to which linked polythene, polytetrafluorethylene and polythene belong.

The invention will now be elucidated with reference to the drawing of an arbitrary embodiment, to which the invention is not limited. In the drawing:

Fig. 1 shows a partly broken away top view of an interconnection between 2—3 cored cables having an inner socket coupling and an outer socket coupling;

Fig. 2 shows the connection according to fig. 1 in side view; and

Fig. 3 shows a cross section through a device for heating the inner socket coupling, into which the plastic is injected.

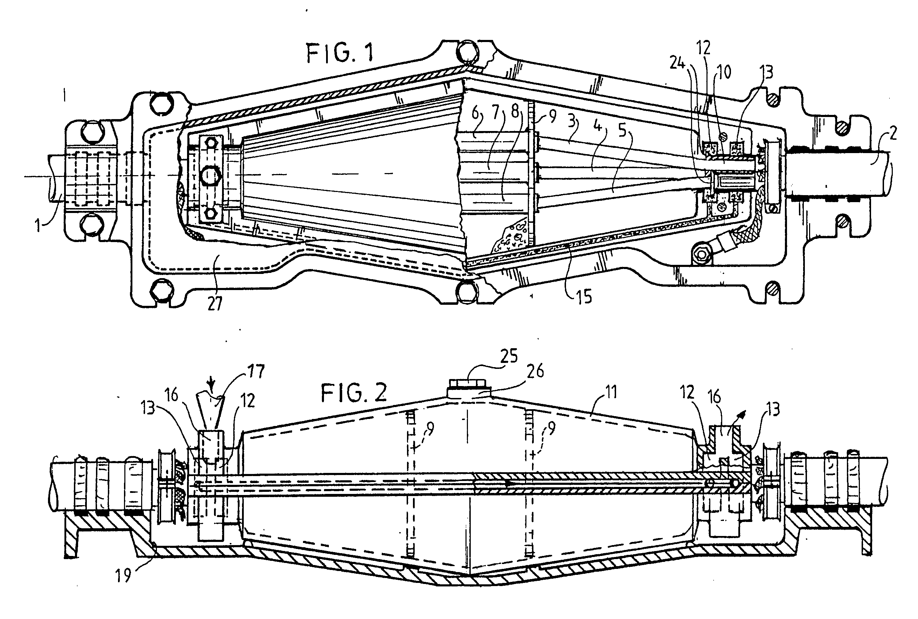

Fig. 1 shows a cable 1 and a second cable 2 each having three cores 3, 4, 5. These cores 3, 4, 5 are connected to each other with coupling elements 6, 7, 8 and spacers 9 while maintaining a desired mutual distance. Cables 1, 2 are accommodated in openings 10 in the end zone of an inner socket coupling 11. In each of these end zones are in addition located two circumferential recesses 12, 13 which open to openings 10. In fig. 1 is shown that circumferential recesses 12, 13 are filled up with injected binary material which has formed polyurethane in cured state. The rings of polyurethane thus formed seal against field formation control funnels 24 of conducting rubber. This ensures a liquid tight sealing. This ensures as a result that no moisture from outside can permeate into the interior of inner socket coupling 11 and that insulating oil present in the socket coupling cannot penetrate to the outside.

As can be seen in fig. 1, and more clearly in fig. 2, the left end zone of inner socket coupling 11 also has two circumferential recesses 12, 13. These are in open communication with the circumferential recesses 12, 13 of the right end zone via a connecting channel 15.

Onto circumferential recesses 12, 13 connect channels 16 whereby plastic can be injected by means of a funnel 17 into recesses 12, 13 of the left end zone, which plastic can also fill circumferential recesses 12, 13 of the right end zone via connecting channel 15. As soon as outflow of plastic from channel 16 of the right end zone is observed, all the recesses 12, 13 are filled. The plastic is of the type that cures quickly.

Fig. 2 shows an inner socket coupling filled with insulating oil with a part 19 of a divisible outer socket coupling.

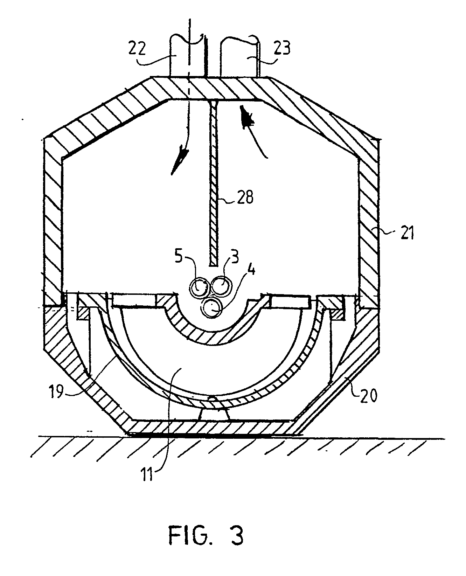

Finally, fig. 3 shows by way of example how heating to the desired temperature can be effected. For this purpose use is made in this (arbitary) embodiment of a container 20 in which the lower part 19 of the outer socket coupling can rest, which container 20 can be covered by a cover 21 to form a housing. Into this housing 21 can be admitted hot air via a feed pipe 22, which air can, through the use of separating partition 28, circulate around the lower part of inner socket coupling 11 and half outer socket coupling 19 placed therein for heating of the binary material in circumferential recesses 12, 13 thereby causing it to cure. The hot air can flow out again via a discharge line 23.

After curing, container 20 and cover 21 can be removed and inner socket coupling 11 and outer socket coupling 19 can be completed in a manner that is not drawn, after which the socket coupling can be finished in the usual way.

For a correct understanding of the method according to the invention it is important to remark that the covering layer of the core or cores of the cables in the end zones of the assembled socket coupling are heated. This heating alone offers the possibility of forming a watertight sealing with the injected plastic. An inner socket coupling of the type drawn and described with reference to the drawing is further filled with insulating oil. The method according to the invention must in this case be performed such that, after the injection of the plastic for the formation of the liquid tight sealing in the end zones, inner socket coupling 11 is filled with the insulating oil via the filling aperture that can be closed off by a screw cap 25. Cap 25 is afterwards fitted as according to fig. 2. Finally, onto the lower part 19 of the outer socket coupling is placed a corresponding upper part 27 (see fig. 1).

For the heating of the covering layer of the cable core(s) use can be made of other techniques, for example resistance material (resistance wire or a semi-conducting covering layer), through which a current is temporarily sent.

The method according to the invention can be applied for the end zones of an inner socket coupling, an outer socket coupling, both socket couplings and/or the area between both socket couplings.

## Claims

1. Method for liquid tight coupling by means of a socket coupling (11) of two cables (1, 2) with one another, each cable (1, 2) comprising at least one conducting core (3, 4, 5) each having a covering layer arranged around it, according to which method the ends of the or each pair of cores (3, 4, 5) to be coupled are connected to one another, the first part of a longitudinally divisible socket coupling (11) is placed in the area of the coupled core ends (3, 4, 5), one or more spacers (9) and/or insulation material is arranged if required in the area of the coupled ends, and the second part of the socket coupling is placed and connected with the first part, whereby the surfaces of both socket coupling (11) parts facing one another have a complementary form such that they butt entirely against one another, and whereby the assembled socket coupling (11) displays at both ends an opening (10) serving to accommodate a cable (1, 2), characterized in that the covering layer of the core(s) (3, 4, 5) is heated and that a plastic is subsequently injected into the end zones of said assembled socket coupling (11), which plastic forms after curing a liquid tight sealing with said covering layer of the core(s).

2. Method as claimed in claim 1, characterized in that the plastic in cured state is polyurethane.

3. Method as claimed in claim 1 or 2, characterized in that the covering layer contains a plastic from the group to which linked polythene, polytetrafluoroethylene and polythene belong.

## Patentansprüche

1. Verfahren zum flüssigkeitsdichten Kuppeln zweier Kabel (1, 2) mittels einer Muffenkupplung (11), wobei jedes Kabel (1, 2) wenigstens eine Leitungsader (3, 4, 5) jeweils mit einer diese umhüllenden Abdeckschicht enthält, bei welchem Verfahren die Enden des bzw. jedes zu kuppelnden Leitungsaderpaares (3, 4, 5) miteinander verbunden werden, der erste Teil einer l längsteilbaren Muffenkupplung (11) in den Bereich der gekuppelten Leitungsaderenden (3, 4, 5) gebracht wird, ein oder mehrere Abstandshalter (9) und/oder Isoliermaterial, falls erforderlich, in den Bereich der gekuppelten Enden angeordnet werden und der zweite Teil der Muffenkupplung plaziert und mit dem ersten Teil verbunden wird, wobei die einander zugewandten Flächen beider Teile der Muffenkupplung (11) komplementär gestaltet sind, sodaß sie vollständig aneinander anliegen, und die zusammengestellte Muffenkupplung (11) an beiden Enden eine Öffnung (10) zur Aufnahme eines Kabels (1, 2) bildet, dadurch gekennzeichnet, daß die Abdeckschicht der Leitungsader(n) (3, 4, 5) erwärmt wird und daß anschließend ein Kunstharz in die Endzonen der zusammengestellten Muffenkupplung (11) injiziert wird, wobei das Kunstharz nach dem Härten eine flüssigkeitsdichte Dichtung mit der Abdeckschicht der Leitungsader(n) bildet.

2. Verfahren nach Anspruch 1, dadurch gekennzeichnet, daß das Kunstharz im gehärteten Zustand polyurethan ist.

3. Verfahren nach Anspruch 1 oder 2, dadurch gekennzeichnet, daß die Abdeckschicht einen Kunststoff aus der Gruppe enthält, zu welcher vernetztes Polyethylen, Polytetrafluorethylen und Polyethylen gehören.

**Revendications**

1. Procédé pour accoupler entre eux, d'une manière étanche à l'eau, deux câbles (1, 2) au moyen d'un accouplement en forme de manchon (11), chaque câble (1, 2) comportant au moins un conducteur (3, 4, 5) autour de chacun desquels est disposée une couche de revêtement, et selon lequel on accouple l'une à l'autre les extrémités du ou de chaque couple de conducteurs (3, 4, 5) devant être accouplés, on met en place une première partie d'un accouplement en forme de manchon (11) pouvant être subdivisé longitudinalement, dans la zone des extrémités accouplées des conducteurs (3, 4, 5), on dispose une ou plusieurs entretoises (9) et/ou un matériau isolant, si cela s'avère nécessaire, dans la zone des extrémités accouplées, et on met en place la seconde partie de l'accouplement en forme de manchon et on la raccorde à la première partie, les surfaces des deux parties de l'accouplement en forme de manchon (11), qui sont tournées l'une vers l'autre, possédant des formes complémentaires telles qu'elles sont entièrement en aboutement l'une contre l'autre, et l'accouplement en forme de manchon (11) assemblé délimitant, au niveau ses deux extrémités, une ouverture (10) servant à loger un câble (1, 2), caractérisé en ce qu'on chauffe la couche de revêtement du ou des conducteurs (3, 4, 5) et qu'on injecte ensuite une matière plastique dans les zones d'extrémité dudit accouplement en forme de manchon assemblé (11), laquelle matière plastique établit après durcissement, conjointement avec la couche de revêtement du ou des conducteurs, une étanchéité aux liquides.

2. Procédé selon la revendication 1, caractérisé en ce que la matière plastique à l'état durcie est du polyuréthane.

3. Procédé selon la revendication 1 ou 2, caractérisé en ce que la couche de revêtement contient une matière plastique appartenant au groupe incluant le polythène réticulé, le polytétrafluoroéthylène et le polythène.

FIG. 1

FIG. 2

FIG. 3